# EUROPEAN PATENT APPLICATION

(11) **EP 4 826 904 A1**
(43) Date of publication of application: **21.10.2026**
(21) Application number: 24909881.5
(22) Date of filing: 21.08.2024
(51) Int. Cl.: H01M 50/618

(54) **LIQUID INJECTION METHOD, DETECTION APPARATUS, LIQUID INJECTION SYSTEM, AND MANUFACTURING SYSTEM FOR BATTERY CELL**

(30) Priority: 27.12.2023 CN 202311827934
(71) Applicant: Contemporary Amperex Technology Co., Limited, Ningde, Fujian 352100 (CN)
(72) Inventor: SHE, Yangfan, Ningde, Fujian 352100 (CN); GE, Shaobing, Ningde, Fujian 352100 (CN); HUANG, Hu, Ningde, Fujian 352100 (CN); LONG, Zhen, Ningde, Fujian 352100 (CN); HUANG, Caixia, Ningde, Fujian 352100 (CN)
(74) Representative: Gong, Jinping
(86) International application number: PCT/CN2024/113696
(87) International publication number: WO 2025/138931

(57) **Abstract**

An electrolyte injection method, a detection apparatus, an electrolyte injection system, and a manufacturing system for battery cells are provided. The electrolyte injection method can significantly improve the electrolyte injection efficiency. The electrolyte injection method includes: constructing an electrolyte injection curve based on the obtained electrolyte injection time and electrolyte injection volume of a battery sample; dividing the electrolyte injection curve into at least two segments so that the average slopes of two adjacent segments of electrolyte injection curves are different, and taking a connection point between the two adjacent segments of electrolyte injection curves as a target time inflection point; calculating electrolyte injection parameters according to the target time inflection point, the electrolyte injection parameters including the number of electrolyte injection operations and the electrolyte injection volume corresponding to each electrolyte injection operation; and providing an electrolyte to an initial battery according to the electrolyte injection parameters, and performing standing treatment between two adjacent electrolyte injection operations to obtain an electrolyte-injected battery. The electrolyte injection method of the present application can significantly improve the electrolyte injection efficiency.

## Description

### CROSS-REFERENCE TO RELATED APPLICATIONS

The present application claims priority to Chinese Patent Application No. 202311827934.8 filed on December 27, 2023 and entitled "ELECTROLYTE INJECTION METHOD, DETECTION APPARATUS, ELECTROLYTE INJECTION SYSTEM, AND MANUFACTURING SYSTEM FOR BATTERY CELLS", the entire content of which is incorporated herein by reference.

### TECHNICAL FIELD

The present application relates to the technical field of battery manufacturing, in particular, to an electrolyte injection method, a detection apparatus, an electrolyte injection system, and a manufacturing system for battery cells.

### BACKGROUND

Batteries are widely applied because of advantages of reliable working performance, no pollution, no memory effect, etc. For example, with the increasing attention to environmental protection problems and the increasing popularity of new-energy vehicles, the demand for batteries will show explosive growth.

However, the current battery production efficiency is relatively low, especially the electrolyte injection efficiency is relatively low, which seriously affects the market demand for batteries. Therefore, there is an urgent need to improve the electrolyte injection efficiency of batteries in a battery manufacturing process.

### SUMMARY OF THE INVENTION

Embodiments of the present application provide an electrolyte injection method, a detection apparatus, an electrolyte injection system, and a manufacturing system for battery cells. The electrolyte injection method can significantly improve the electrolyte injection efficiency.

According to a first aspect, an embodiment of the present application provides an electrolyte injection method, including:
constructing an electrolyte injection curve based on the obtained electrolyte injection time and electrolyte injection volume of a battery sample;
dividing the electrolyte injection curve into at least two segments so that the average slopes of two adjacent segments of electrolyte injection curves are different, and taking a connection point between the two adjacent segments of electrolyte injection curves as a target time inflection point;
calculating electrolyte injection parameters according to the target time inflection point, the electrolyte injection parameters including the number of electrolyte injection operations and the electrolyte injection volume corresponding to each electrolyte injection operation; and
providing an electrolyte to an initial battery according to the electrolyte injection parameters, and performing standing treatment between two adjacent electrolyte injection operations to obtain an electrolyte-injected battery.

Therefore, the embodiment of the present application confirms the electrolyte injection characteristic (electrolyte injection curve) of the battery sample by obtaining the parameters of the battery sample during the electrolyte injection process, such as the electrolyte injection time and the electrolyte injection volume, and confirms the target time inflection point that affects the electrolyte injection efficiency according to the electrolyte injection curve, thereby confirming the electrolyte injection parameters of the initial battery, performing electrolyte injection operation in multiple times, and reserving a standing treatment time between two adjacent electrolyte injection operations. During this time interval, the electrolyte can flow into pores of a positive electrode plate, a negative electrode plate and a spacer to infiltrate an electrode assembly and create a free space for the initial battery, which is convenient for the next electrolyte injection after the standing treatment, reduces the electrolyte injection resistance of the next electrolyte injection, shortens the electrolyte injection time of the next electrolyte injection, and improves the electrolyte injection efficiency of the next electrolyte injection, thereby improving the overall electrolyte injection efficiency and further improving the production efficiency of the battery cell.

In some embodiments, the step of providing an electrolyte to an initial battery according to the electrolyte injection parameters, and performing standing treatment between two adjacent electrolyte injection operations to obtain an electrolyte-injected battery includes:
providing a first injection volume of electrolyte to an initial battery to obtain an electrolyte-pre-injected battery, where the number of electrolyte injection operations in the electrolyte injection parameters is two, and the electrolyte injection volumes corresponding to the two electrolyte injection operations are respectively the first electrolyte injection volume and a second electrolyte injection volume;
performing standing treatment on the electrolyte-pre-injected battery to obtain a standing battery; and
providing the second injection volume of electrolyte to the standing battery to obtain an electrolyte-injected battery.

Therefore, the embodiment of the present application can significantly improve the electrolyte injection efficiency of the second electrolyte injection process through the above operation, so that the efficiency of single electrolyte injection is higher, thereby improving the electrolyte injection efficiency of the entire electrolyte injection process.

In some embodiments, the step of providing an electrolyte to an initial battery according to the electrolyte injection parameters, and performing standing treatment between two adjacent electrolyte injection operations to obtain an electrolyte-injected battery includes:
providing a first injection volume of electrolyte to an initial battery to obtain an electrolyte-pre-injected battery, where the number of electrolyte injection operations in the electrolyte injection parameters is three, and the electrolyte injection volumes corresponding to the three electrolyte injection operations are respectively the first electrolyte injection volume, a second electrolyte injection volume, and a third electrolyte injection volume;
performing standing treatment on the electrolyte-pre-injected battery to obtain a pre-standing battery;
providing the second injection volume of electrolyte to the pre-standing battery to obtain an electrolyte-re-injected battery;
performing standing treatment on the electrolyte-re-injected battery to obtain a re-standing battery; and
providing the third injection volume of electrolyte to the re-standing battery to obtain an electrolyte-injected battery.

Therefore, this embodiment of the present application can significantly improve the electrolyte injection efficiency of the second electrolyte injection process and the third electrolyte injection process through the above operation, so that the efficiency of single electrolyte injection is higher, thereby improving the electrolyte injection efficiency of the entire electrolyte injection process.

In some embodiments, the standing treatment time ranges from 0.1 h to 10 h. When the standing treatment time is within the above range, the electrolyte can infiltrate the inside of the electrode assembly, diffuse into the pores of the electrode assembly, and release a free space, thereby being conducive to improving the electrolyte injection efficiency after the standing treatment.

In some embodiments, the standing treatment temperature ranges from 20°C to 65°C. When the standing treatment temperature is within the above range, the electrolyte can infiltrate the inside of the electrode assembly, diffuse into the pores of the electrode assembly, and release a free space, thereby being conducive to improving the electrolyte injection efficiency after the standing treatment.

In some embodiments, before the step of providing an electrolyte to an initial battery according to the electrolyte injection parameters, and performing standing treatment between two adjacent electrolyte injection operations to obtain an electrolyte-injected battery, the method further includes: performing vacuum treatment on the initial battery to enable the internal air pressure of the initial battery to meet a preset air pressure value. Before electrolyte injection, the initial battery is vacuumized, so that there is a certain vacuum degree inside the initial battery, which is conducive to the electrolyte injection operation.

In some embodiments, the preset air pressure value (absolute pressure) ranges from 100 Pa to 30000 Pa.

In some embodiments, the step of constructing an electrolyte injection curve based on the electrolyte injection time and electrolyte injection volume of a battery sample includes:
providing the electrolyte to the battery sample;
obtaining the initial time of providing the electrolyte and the weight of the battery sample corresponding to the initial time, and obtaining the weights of the battery sample corresponding to multiple times respectively, where the multiple times occur after the initial time;
calculating the difference between each time and the initial time as an electrolyte injection time, and calculating the difference between the weight corresponding to each time and the weight corresponding to the initial time as an electrolyte injection volume; and
constructing an electrolyte injection curve based on the electrolyte injection time and the electrolyte injection volume.

Therefore, this embodiment of the present application can accurately obtain relevant electrolyte injection parameters of the battery sample through the above steps, thereby improving the accuracy of electrolyte injection curve construction.

In some embodiments, the average slope of one of the two adjacent segments of electrolyte injection curves is A, and the average slope of the other segment of electrolyte injection curve is B, where 1×10⁻⁶≤A/B<1, and optionally, 1×10⁻⁶≤A/B≤1×10⁻¹. By defining the above formula, the electrolyte injection operation can be performed more accurately in multiple times, thereby improving the electrolyte injection efficiency of each single electrolyte injection.

According to a second aspect, the present application provides a detection apparatus. The detection apparatus includes an acquisition assembly, an accommodating assembly, and an electrolyte injection assembly. The acquisition assembly is configured to obtain multiple times and the weight of a battery sample corresponding to each time. The accommodating assembly is arranged on the acquisition assembly, the accommodating assembly includes an accommodating cavity with at least one opening, and the accommodating cavity is configured to accommodate the battery sample. The electrolyte injection assembly is arranged opposite to the opening, and the electrolyte injection assembly is configured to be connected to or disconnected from the battery sample.

Therefore, the detection apparatus in the embodiment of the present application can accurately obtain relevant electrolyte injection parameters of the battery sample, thereby improving the accuracy of electrolyte injection curve construction.

In some embodiments, the detection apparatus further includes a bracket assembly. The bracket assembly includes a base and a guide member. The base is provided with an acquisition assembly. The guide member includes a supporting portion and a sliding portion. The supporting portion is connected to the base. The sliding portion is fixedly connected to the electrolyte injection assembly. The sliding portion is connected to the supporting portion. The sliding portion includes a first state and a second state. In the first state, the sliding portion is movably connected to the supporting portion to drive the electrolyte injection assembly to move towards or away from the accommodating assembly. In the second state, the sliding portion is locked with the supporting portion. The guide member can provide a guiding role for the movement of the electrolyte injection assembly to improve the movement accuracy of the electrolyte injection assembly.

In some embodiments, the supporting portion extends along a first direction. The accommodating assembly and the electrolyte injection assembly are arranged oppositely along the first direction. In the first state, the sliding portion is movably connected to the supporting portion to drive the electrolyte injection assembly to move towards or away from the accommodating assembly along the first direction. The sliding portion drives the electrolyte injection assembly to move, and the supporting portion can provide a guiding role for the movement of the electrolyte injection assembly, thereby improving the movement accuracy of the electrolyte injection assembly.

In some embodiments, the electrolyte injection assembly includes an electrolyte injection member and an air pressure pipeline. The electrolyte injection member includes an electrolyte injection pipeline and an electrolyte injection portion communicating with the electrolyte injection pipeline. The electrolyte injection pipeline is configured to communicate with an external electrolyte. The electrolyte injection portion is configured to be connected to or disconnected from the battery sample. The air pressure pipeline is arranged at the electrolyte injection portion, the air pressure pipeline is configured to communicate with an external air path, and the air pressure pipeline is configured to be connected to or disconnected from the battery sample through the electrolyte injection portion.

According to a third aspect, the present application provides an electrolyte injection system. The electrolyte injection system includes the detection apparatus according to any embodiment of the second aspect of the present application, a control apparatus, and an electrolyte providing apparatus. The control apparatus is configured to calculate electrolyte injection parameters according to the time detected by the detection apparatus and the weight of a battery sample. The electrolyte providing apparatus is configured to provide an electrolyte to an initial battery according to the electrolyte injection parameters.

According to a fourth aspect, the present application provides a manufacturing system for battery cells. The manufacturing system includes the electrolyte injection system according to any embodiment of the third aspect of the present application.

### DESCRIPTION OF DRAWINGS

In order to illustrate the technical solutions of the embodiments of the present application more clearly, the accompanying drawings required in the embodiments of the present application are briefly introduced below. Obviously, the accompanying drawings described below are only some embodiments of the present application. For those of ordinary skill in the art, other accompanying drawings can also be obtained according to these accompanying drawings without any creative effort:
FIG. 1 is a schematic flowchart of an electrolyte injection method provided in an embodiment of the present application;
FIG. 2 is a schematic flowchart of step S100 in an electrolyte injection method provided in an embodiment of the present application;
FIG. 3 is a schematic flowchart of step S300 in an electrolyte injection method provided in an embodiment of the present application;
FIG. 4 is a schematic flowchart of step S300 in an electrolyte injection method provided in another embodiment of the present application;
FIG. 5 is a schematic flowchart of an electrolyte injection method provided in another embodiment of the present application;
FIG. 6 is a schematic structural diagram of a manufacturing system for battery cells in an embodiment of the present application;
FIG. 7 is a schematic structural diagram of an electrolyte injection system in an embodiment of the present application;
FIG. 8 is a schematic structural diagram of a control apparatus in an electrolyte injection system in an embodiment of the present application;
FIG. 9 is a schematic structural diagram of a detection apparatus in an embodiment of the present application; and
FIG. 10 is a schematic structural diagram of a detection apparatus applied to detect a battery sample in an embodiment of the present application.

### Description of reference numerals:

X. first direction;
1. manufacturing system;
10. electrolyte injection system;
100. detection apparatus;
110. acquisition assembly;
120. accommodating assembly; 121. accommodating cavity; 122. opening;
130. electrolyte injection assembly; 131. electrolyte injection member; 1311. electrolyte injection pipeline; 1322. electrolyte injection portion; 132. air pressure pipeline;
140. bracket assembly; 141. base; 142. guide member; 1421. supporting portion; 1422. sliding portion;
200. control apparatus; 201. processor; 202. memory; 203. communication interface; 204. communication bus;
300. electrolyte providing apparatus;
2. battery sample.

### DETAILED DESCRIPTION

Embodiments of an electrolyte injection method, a detection apparatus, an electrolyte injection system, and a manufacturing system for battery cells of the present application are specifically disclosed below with appropriate reference to the detailed description of the accompanying drawings. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. A range defined in this manner may be inclusive or exclusive of end values, and may be arbitrarily combined, that is, any lower limit may be combined with any upper limit to form a range. For example, if ranges of 60 to 120 and 80 to 110 are listed for a particular parameter, it is understood that ranges of 60 to 110 and 80 to 120 are also contemplated. Additionally, if the minimum range values 1 and 2 are listed, and if the maximum range values 3, 4, and 5 are listed, the following ranges are all contemplated: 1 to 3, 1 to 4, 1 to 5, 2 to 3, 2 to 4, and 2 to 5. In the present application, unless stated otherwise, the numerical range "a to b" represents an abbreviated representation of any combination of real numbers between a and b, where both a and b are real numbers. For example, the numerical range "0 to 5" means that all real numbers between "0 to 5" have been listed herein, and "0 to 5" is just an abbreviated representation of the combination of these numerical values. Additionally, when it is stated that a certain parameter is an integer greater than or equal to 2, it is equivalent to disclosing that the parameter is an integer, such as 2, 3, 4, 5, 6, 7, 8, 9, 10, 11, or 12.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps S of the present application may be performed sequentially or randomly, and preferably sequentially. For example, the method includes steps S(a) and S(b), which means that the method may include steps S(a) and S(b) performed sequentially, or may include steps S(b) and S(a) performed sequentially. For example, the reference to the method may further include step S(c), meaning that step S(c) may be added to the method in any order. For example, the method may include steps S(a), S(b) and S(c), or may further include steps S(a), S(c) and S(b), or may further include steps S(c), S(a) and S(b), and the like.

In the description of the embodiments of the present application, orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the accompanying drawing, and are only for the convenience of describing the embodiments of the present application and simplifying the description, and do not indicate or imply that the apparatus or element referred to must have a specific orientation or be constructed and operated in a specific orientation, and therefore cannot be construed as a restriction on the embodiments of the present application.

In addition, the technical terms "first," "second," etc. are used for descriptive purposes only, and cannot be construed as indicating or implying a relative importance, or implicitly specifying the number of the indicated technical features. In the description of the embodiments of the present application, the meaning of "a plurality of" is two or more, unless otherwise explicitly and specifically defined.

In the description of the embodiments of the present application, unless otherwise explicitly specified and defined, the technical terms "mount," "couple," "connect," "fix", etc., should be understood in a broad sense, for example, a fixed connection, a detachable connection, or an integral connection; or a mechanical connection, or an electrical connection; or a direct connection, an indirect connection through an intermediate medium, or an internal communication of two elements, or interaction between two elements. For those of ordinary skill in the art, the specific meanings of the above terms in the embodiments of the present application can be understood according to specific situations.

In the embodiments of the present application, the terms "a plurality of" and "various" mean two or more.

In the embodiments of the present application, a battery cell may include a lithium-ion secondary battery cell, a lithium-ion primary battery cell, a lithium-sulfur battery cell, a sodium/lithium-ion battery cell, a sodium-ion battery cell, or a magnesium-ion battery cell, which is not limited in the embodiments of the present application. The battery cell may be in a cylindrical shape, a flat shape, a cuboid shape or other shapes, which is also not limited in the embodiments of the present application. Battery cells are generally classified into three types according to encapsulating manners: cylindrical battery cells, square battery cells and pouch cells, which are also not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box body for encapsulating one or more battery cells. The box body can prevent liquids or other foreign matters from affecting the charging or discharging of the battery cell.

The battery cell includes a case, an electrode assembly, and an electrolyte. The electrode assembly includes a positive electrode plate, a negative electrode plate, and a spacer. The battery cell operates mainly relying on the movement of metal ions between the positive electrode plate and the negative electrode plate through the electrolyte.

The preparation process of the battery cell includes an electrode manufacturing process, an assembly process, and a post-electrolyte injection process. The assembly process is the process of assembling the positive electrode plate, the negative electrode plate, and the spacer into the case, and then injecting the electrolyte into the case. In this process, the efficiency of injecting the electrolyte has a significant impact on production efficiency. The electrolyte is usually injected once (i.e., the electrolyte required for the battery cell is injected into the case once). This electrolyte injection method takes a relatively long electrolyte injection time and has poor electrolyte injection efficiency, which is not conducive to improving the production efficiency of the battery cell.

In view of the poor electrolyte injection efficiency in related technologies, it needs to be further improved. In the embodiments of the present application, by acquiring the electrolyte injection curve generated during one electrolyte injection process and observing the rules of the electrolyte injection curve, multiple times of electrolyte injection are performed, which can effectively shorten the electrolyte injection time and improve the electrolyte injection efficiency.

An embodiment of the present application provides an electrolyte injection method.

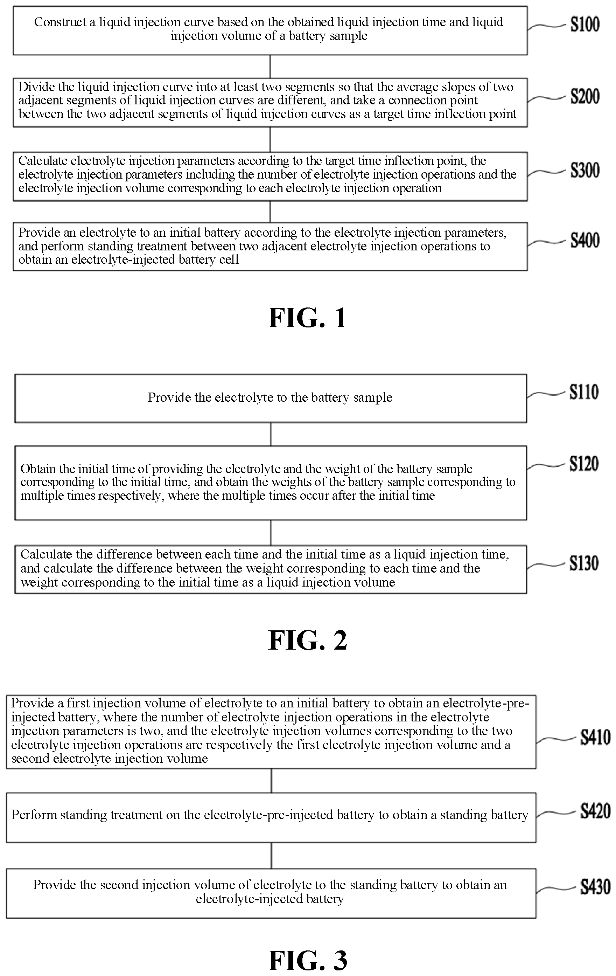

As shown in FIG. 1, the electrolyte injection method includes:
step S100: an electrolyte injection curve is constructed based on the obtained electrolyte injection time and electrolyte injection volume of a battery sample;
step S200: the electrolyte injection curve is divided into at least two segments so that the average slopes of two adjacent segments of electrolyte injection curves are different, and a connection point between the two adjacent segments of electrolyte injection curves is taken as a target time inflection point;
step S300: electrolyte injection parameters are calculated according to the target time inflection point, and the electrolyte injection parameters include the number of electrolyte injection operations and the electrolyte injection volume corresponding to each electrolyte injection operation; and
step S400: an electrolyte is provided to an initial battery according to the electrolyte injection parameters, and standing treatment is performed between two adjacent electrolyte injection operations to obtain an electrolyte-injected battery cell.

In this embodiment of the present application, the battery sample refers to a battery cell that has not yet been injected with an electrolyte; and the initial battery refers to a battery cell that has not yet been injected with an electrolyte. The battery sample and the initial battery may be battery cells of the same specification. For example, the battery sample and the initial battery have the same case size, the same parameters for internal electrode assembly settings, and the same total electrolyte injection volume. The battery sample can be used as a test sample to detect relevant electrolyte injection parameters, and an excellent electrolyte injection scheme can be provided according to a detection result for electrolyte injection of the initial battery in actual production.

There is a free space inside the battery sample or initial battery. The free space includes a gap between the case and the electrode assembly. The free space may also include interlayer gaps between the positive electrode plate, the spacer, and the negative electrode plate in the electrode assembly. The free space can accommodate the electrolyte. After the electrolyte is injected, the electrolyte is accommodated in the free space. The flow steps of the electrolyte are as follows: (1) the electrolyte moves from between the case and the electrode assembly to the inside of the electrode assembly; and (2) the electrolyte flows inside the electrode assembly and infiltrates the electrode assembly. The infiltration steps include: (2.1) the electrolyte is transmitted in the gap between the positive electrode plate and the spacer under the capillary force, and in the gap between the negative electrode plate and the spacer; (2.2) the electrolyte seeps in the pores of the spacer; and (2.3) the electrolyte diffuses through the spacer to the surfaces of the positive electrode plate and the negative electrode plate on both sides, and then diffuses into the pores of the positive electrode plate and the negative electrode plate. The flow velocity of the electrolyte in step (1) is faster. During this process, as the electrolyte injection volume of the electrolyte increases, the free space in the battery sample decreases. In addition, during this process, due to the existence of the free space, the electrolyte injection resistance of the electrolyte is smaller, and the electrolyte injection efficiency is higher. As the electrolyte injection volume increases, the free space in the battery sample is further reduced, the space available for accommodating the electrolyte is smaller, and the flow velocity of the electrolyte in step (2) is slower, which increases the electrolyte injection resistance of the electrolyte in step (2) and leads to poor electrolyte injection efficiency.

In related technologies, the electrolyte injection volume is usually divided into two parts artificially, for example, one part is 80% of the electrolyte injection volume (calculated by volume), and the other part is 20% of the electrolyte injection volume. 80% of the electrolyte injection volume is pre-injected into the initial battery, and 20% of the electrolyte injection volume is injected for the second time. Although the method also involves electrolyte injection in multiple times, the division of the electrolyte injection volume and the electrolyte injection time interval are not analyzed and tested according to the flow time of the electrolyte in the battery cells of specific specifications, the infiltration time in the electrode assembly, etc., and cannot effectively improve the electrolyte injection efficiency of the second electrolyte injection, resulting in an insignificant improvement in the overall electrolyte injection efficiency.

The embodiment of the present application confirms the electrolyte injection characteristic (electrolyte injection curve) of the battery sample by obtaining the parameters of the battery sample during the electrolyte injection process, such as the electrolyte injection time and the electrolyte injection volume, and confirms the target time inflection point that affects the electrolyte injection efficiency according to the electrolyte injection curve, thereby confirming the electrolyte injection parameters of the initial battery, performing electrolyte injection operation in multiple times, and reserving a standing treatment time between two adjacent electrolyte injection operations. During this time interval, the electrolyte can flow into pores of a positive electrode plate, a negative electrode plate and a spacer to infiltrate an electrode assembly and create a free space for the initial battery, which is convenient for the next electrolyte injection after the standing treatment, reduces the electrolyte injection resistance of the next electrolyte injection, shortens the electrolyte injection time of the next electrolyte injection, and improves the electrolyte injection efficiency of the next electrolyte injection, thereby improving the overall electrolyte injection efficiency and further improving the production efficiency of the battery cell.

### [Step S100]

An electrolyte injection curve is constructed based on the obtained electrolyte injection time and electrolyte injection volume of a battery sample. Optionally, an electrolyte injection curve is constructed based on the electrolyte injection time and electrolyte injection volume of the battery sample obtained during one electrolyte injection process.

In this embodiment of the present application, one time of electrolyte injection refers to injection of 100% of the electrolyte into the battery sample in a continuous period of time. The electrolyte injection curve constructed during one electrolyte injection process is more likely to reflect the inflection point that affects the electrolyte injection efficiency. Specifically, the electrolyte injection curve may be a curve drawn with the electrolyte injection time as a horizontal coordinate and the electrolyte injection volume as a vertical coordinate; of course, the electrolyte injection curve may also be a curve drawn with the electrolyte injection time as a vertical coordinate and the electrolyte injection volume as a horizontal coordinate. Abnormal points can be eliminated in the process of constructing the electrolyte injection curve. The detection apparatus can acquire multiple times and the weight of the battery sample corresponding to each time, so as to calculate the electrolyte injection time and the electrolyte injection volume.

As shown in FIG. 2, in some embodiments, step S100 may include:
step S110: the electrolyte is provided to the battery sample.

The total electrolyte injection volume required for the battery sample may be obtained according to design parameters of a final product battery cell, or may be detected and calculated by devices and methods known in the art. For example, the electrolyte needs to fill the pores in the electrode assembly (the positive electrode plate, the negative electrode plate, and the separator), and there is a free space between the case and the electrode assembly (the free space may be calculated according to the design parameters of the final product battery cell). Thus, the total injection volume of the electrolyte is equal to the sum of the pores of the electrode assembly and the free space.

Step S120: The initial time of providing the electrolyte and the weight of the battery sample corresponding to the initial time are obtained, and the weights of the battery sample corresponding to multiple times respectively is obtained, where the multiple times occur after the initial time.

Step S110 and step S120 may occur simultaneously, that is, the parameters of the battery sample are acquired during the process of providing the battery sample. The electrolyte is injected into the battery sample at the initial time. It can be understood that at the initial time T₀, the battery sample does not contain the electrolyte, or the volume of the electrolyte is 0. The weight of the battery sample obtained at this time is the weight M₀ of the battery sample without the electrolyte. During the process of injecting the electrolyte, the weight of the battery sample corresponding to multiple times is obtained. The multiple times may be two times, three times, four times, ten times, one hundred times, one thousand times, and the like.

For example, taking a case where multiple times include three times as an example, a time T_{P}, a time T_{Q}, and a time T_{S} occur sequentially, that is, the time T_{P} occurs after the initial time T₀, the time T_{Q} occurs after the time T_{P}, and the time T_{S} occurs after the time T_{Q}.

After the initial time, the electrolyte is continuously injected into the battery sample, and the weight M_{P} of the battery sample is obtained at the time T_{P};
the electrolyte is continuously injected into the battery sample, and the weight M_{Q} of the battery sample is obtained at the time T_{Q}; and
the electrolyte is continuously injected into the battery sample, and the weight M_{S} of the battery sample is obtained at the time T_{S}.

Step S130: The difference between each time and the initial time is calculated as an electrolyte injection time, and the difference between the weight corresponding to each time and the weight corresponding to the initial time is calculated as an electrolyte injection volume.

According to the above method for obtaining the time and weight,
the difference between the time T_{P} and the initial time T₀ is calculated as an electrolyte injection time T_{P}-T₀, and the electrolyte injection volume within the electrolyte injection time is M_{P}-M₀;
the difference between the time T_{Q} and the initial time T₀ is calculated as an electrolyte injection time T_{Q}-T₀, and the electrolyte injection volume within the electrolyte injection time is M_{Q}-M₀; and
the difference between the time T_{S} and the initial time T₀ is calculated as an electrolyte injection time T_{S}-T₀, and the electrolyte injection volume within the electrolyte injection time is M_{S}-M₀.

Step S140: An electrolyte injection curve is constructed based on the electrolyte injection time and the electrolyte injection volume.

The electrolyte injection time and the electrolyte injection volume corresponding to the electrolyte injection time are used as coordinate points, and the coordinate points include (T_{P}-T₀, M_{P}-M₀), (T_{Q}-T₀, M_{Q}-M₀), (T_{S}-T₀, M_{S}-M₀), etc. to construct an electrolyte injection curve. For example, the electrolyte injection curve is drawn in an X-Y plane rectangular coordinate system with the electrolyte injection time as a horizontal coordinate and the electrolyte injection volume as a vertical coordinate. In the process of drawing the electrolyte injection curve, abnormal points can be eliminated to ensure that the electrolyte injection curve is a smooth curve, thereby being able to more accurately reflect an electrolyte injection state.

Therefore, this embodiment of the present application can accurately obtain relevant electrolyte injection parameters of the battery sample through the above steps, thereby improving the accuracy of electrolyte injection curve construction.

### [Step S200]

The electrolyte injection curve is divided into at least two segments so that the average slopes of two adjacent segments of electrolyte injection curves are different, and a connection point between the two adjacent segments of electrolyte injection curves is taken as a target time inflection point.

In the early stage of electrolyte injection, the free space in the battery sample is relatively sufficient, and the electrolyte injection resistance is smaller. As the electrolyte injection time increases, the electrolyte injection volume increases significantly. In the electrolyte injection curve drawn with the electrolyte injection time as the horizontal coordinate and the electrolyte injection volume as the vertical coordinate, the slope of the electrolyte injection curve is larger. In the later stage of electrolyte injection, there is little or even no free space in the battery sample, and the electrolyte injection resistance is larger. As the electrolyte injection time increases, the electrolyte injection volume increases slowly. In the electrolyte injection curve drawn with the electrolyte injection time as the horizontal coordinate and the electrolyte injection volume as the vertical coordinate, the slope of the electrolyte injection curve is smaller.

Due to the above electrolyte injection characteristics, there are larger slope differences in electrolyte injection curves. The slope differences are used as the basis for curve division to confirm the target time inflection point. The number of the target time inflection point may be at least one, such as one, two, three, etc. When there is one target time inflection point, the electrolyte injection curve is divided into two segments. The average slope of each segment of the electrolyte injection curve may be understood as taking multiple coordinate points in this segment to calculate the slope separately, and then taking an average value. The number of the coordinate points may be five, ten, one hundred, etc. When there are two target time inflection points, the two target time inflection points correspond to different electrolyte injection times, that is, horizontal coordinates are different. In this case, the electrolyte injection curve is divided into three segments. When there are three target time inflection points, the three target time inflection points correspond to different electrolyte injection times, that is, horizontal coordinates are different. In this case, the electrolyte injection curve is divided into four segments.

As the number of division of the electrolyte injection curve increases, standing treatment is performed between two adjacent electrolyte injection operations. The standing treatment increases the free space, so that the electrolyte injection efficiency can be improved during the electrolyte injection operation after the standing treatment. However, the standing treatment is required during both adjacent electrolyte injection operations, resulting in a larger number of times of standing treatment, which may cause little improvement in the electrolyte injection efficiency during the overall electrolyte injection process.

In order to further improve the electrolyte injection efficiency, this embodiment of the present application further limits the slope difference. For example, in two adjacent segments of electrolyte injection curves, the average slope of one segment of the electrolyte injection curve is A, and the average slope of the other segment of the electrolyte injection curve is B. The larger average slope is defined as B, and the smaller average slope is defined as A, where 1×10⁻⁶≤A/B<1; and optionally, 1×10⁻⁶≤A/B≤1×10⁻¹. For example, in the electrolyte injection curve drawn with the electrolyte injection time as a horizontal coordinate and the electrolyte injection volume as a vertical coordinate, the average slope in the early stage of electrolyte injection is larger, and B may be the average slope in the early stage of electrolyte injection; and the average slope in the later stage of electrolyte injection is smaller, and A may be the average slope in the later stage of electrolyte injection. By defining the above formula, the electrolyte injection operation can be performed more accurately in multiple times, thereby improving the electrolyte injection efficiency of each single electrolyte injection.

### [Step S300]

Electrolyte injection parameters are calculated according to the target time inflection point, and the electrolyte injection parameters include the number of electrolyte injection operations and the electrolyte injection volume corresponding to each electrolyte injection operation.

The coordinate value of the target time inflection point (the electrolyte injection time and the electrolyte injection volume corresponding to the electrolyte injection time) and the number correspond to the specific operation of electrolyte injection. When there is one target time inflection point, the electrolyte injection curve is divided into two segments, and the electrolyte injection operation is performed twice. The electrolyte injection volume corresponding to each electrolyte injection operation is calculated according to the electrolyte injection volume coordinate value corresponding to each target time inflection point. When there are two target time inflection points, the electrolyte injection curve is divided into three segments, and the electrolyte injection operation is performed three times. The electrolyte injection volume corresponding to each electrolyte injection operation is calculated according to the electrolyte injection volume coordinate value corresponding to each target time inflection point. When there are three target time inflection points, the electrolyte injection curve is divided into four segments, and the electrolyte injection operation is performed four times. The electrolyte injection volume corresponding to each electrolyte injection operation is calculated according to the electrolyte injection volume coordinate value corresponding to each target time inflection point. When there are four target time inflection points, the electrolyte injection curve is divided into five segments, and the electrolyte injection operation is performed five times. The electrolyte injection volume corresponding to each electrolyte injection operation is calculated according to the electrolyte injection volume coordinate value corresponding to each target time inflection point. Of course, there may be more target time inflection points, and the specific electrolyte injection operation may be determined corresponding to the target time inflection points.

### [Step S400]

An electrolyte is provided to an initial battery according to the electrolyte injection parameters, and standing treatment is performed between two adjacent electrolyte injection operations to obtain an electrolyte-injected battery cell. The initial battery is a battery cell to be produced that does not contain an electrolyte.

As shown in FIG. 3, in some embodiments, the number of the target time inflection point is one, and step S400 may include:
step S410: a first injection volume of electrolyte is provided to an initial battery to obtain an electrolyte-pre-injected battery, where the number of electrolyte injection operations in the electrolyte injection parameters is two, and the electrolyte injection volumes corresponding to the two electrolyte injection operations are respectively the first electrolyte injection volume and a second electrolyte injection volume;
step S420: standing treatment is performed on the electrolyte-pre-injected battery to obtain a standing battery; and
step S430: the second injection volume of electrolyte is provided to the standing battery to obtain an electrolyte-injected battery.

For example, there is one target time inflection point, the corresponding horizontal coordinate is 20% of the total electrolyte injection time (the total electrolyte injection time refers to the time corresponding to the completion of all electrolyte injection of the battery sample during one electrolyte injection process), and the corresponding vertical coordinate is 70% of the total electrolyte injection volume (the total electrolyte injection volume is the required electrolyte injection volume calculated according to design parameters of the battery sample). According to the above target time inflection point, the electrolyte injection curve is divided into two segments of curves, and the electrolyte injection operation is also divided into two times. The first time of electrolyte injection is to inject 70% of the total electrolyte injection volume (i.e., the first electrolyte injection volume) into the initial battery to obtain an electrolyte-pre-injected battery. After the first time of electrolyte injection, standing treatment is performed, and then, the second time of electrolyte injection is performed after the standing treatment. The second time of electrolyte injection is to inject 30% of the total electrolyte injection volume (i.e., the second electrolyte injection volume) into the battery sample to complete the electrolyte injection operation. The electrolyte injection efficiency of the second electrolyte injection process can be significantly improved according to the above operation, so that the efficiency of single electrolyte injection is higher, thereby improving the electrolyte injection efficiency of the entire electrolyte injection process.

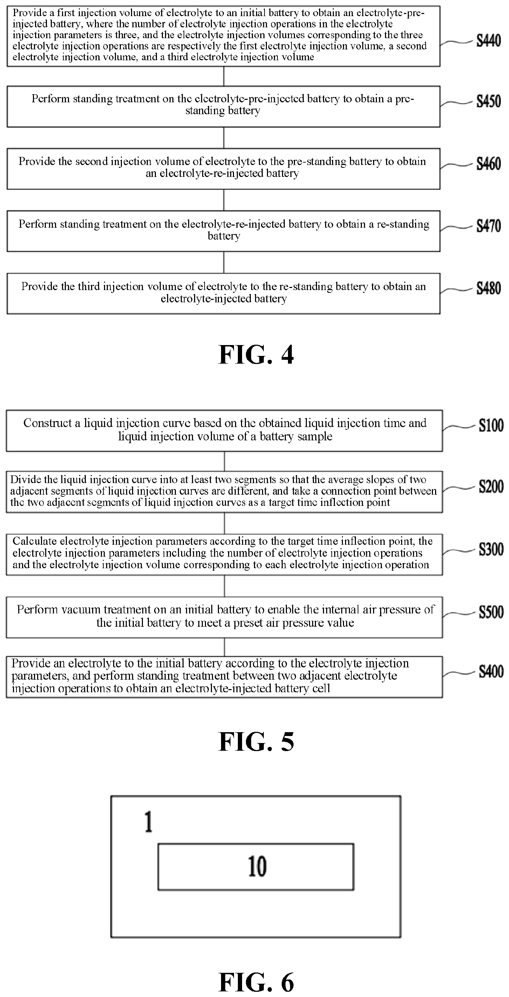

As shown in FIG. 4, in some embodiments, the number of the target time inflection point is two, and step S400 may include:
step S440: a first injection volume of electrolyte is provided to an initial battery to obtain an electrolyte-pre-injected battery, where the number of electrolyte injection operations in the electrolyte injection parameters is three, and the electrolyte injection volumes corresponding to the three electrolyte injection operations are respectively the first electrolyte injection volume, a second electrolyte injection volume, and a third electrolyte injection volume;
step S450: standing treatment is performed on the electrolyte-pre-injected battery to obtain a pre-standing battery;
step S460: the second injection volume of electrolyte is provided to the pre-standing battery to obtain an electrolyte-re-injected battery;
step S470: standing treatment is performed on the electrolyte-re-injected battery to obtain a re-standing battery; and
step S480: the third injection volume of electrolyte is provided to the re-standing battery to obtain an electrolyte-injected battery.

For example, there are two target time inflection points. The horizontal coordinate corresponding to the first target time inflection point is 20% of the total electrolyte injection time, and the corresponding vertical coordinate is 70% of the total electrolyte injection volume; and the horizontal coordinate corresponding to the second target time inflection point is 40% of the total electrolyte injection time, and the corresponding vertical coordinate is 85% of the total electrolyte injection volume. According to the above target time inflection point, the electrolyte injection curve is divided into three segments of curves, and the electrolyte injection operation is also divided into three times. The first time of electrolyte injection is to inject 70% of the total electrolyte injection volume (i.e., the first electrolyte injection volume) into the battery sample. After the first time of electrolyte injection, standing treatment is performed. After the standing treatment, the second time of electrolyte injection is performed. The second time of electrolyte injection is to inject 15% (i.e., 85% minus 70%) of the total electrolyte injection volume (i.e., the second electrolyte injection volume) into the battery sample. After the second time of electrolyte injection, standing treatment is performed. After the standing treatment, the third time of electrolyte injection is performed. The third time of electrolyte injection is to inject 15% of the total electrolyte injection volume (i.e., the third electrolyte injection volume) into the battery sample to complete the electrolyte injection operation. Therefore, this embodiment of the present application can significantly improve the electrolyte injection efficiency of the second electrolyte injection process and the third electrolyte injection process through the above operation, so that the efficiency of single electrolyte injection is higher, thereby improving the electrolyte injection efficiency of the entire electrolyte injection process.

Of course, there may be three target time inflection points. Corresponding to the target time inflection points, the electrolyte injection operation is performed four times. The electrolyte injection volume corresponding to each electrolyte injection operation is calculated according to the electrolyte injection volume corresponding to each target time inflection point. Of course, there may be more target time inflection points, and the parameters corresponding to the electrolyte injection operation are calculated corresponding to the target time inflection points.

In some embodiments, the standing treatment time may range from 0.1 h to 10 h. When the standing treatment time is within the above range, the electrolyte can infiltrate the inside of the electrode assembly, diffuse into the pores of the electrode assembly, and release a free space, thereby being conducive to improving the electrolyte injection efficiency after the standing treatment. Exemplarily, the standing treatment time may be 0.1 h, 0.5 h, 1 h, 2 h, 3 h, 4 h, 5 h, 6 h, 7 h, 8 h, 9 h, or 10 h, or may be within a range consisting of any two of the above values.

In some embodiments, the standing treatment temperature ranges from 20°C to 65°C. When the standing treatment temperature is within the above range, the electrolyte can infiltrate the inside of the electrode assembly, diffuse into the pores of the electrode assembly, and release a free space, thereby being conducive to improving the electrolyte injection efficiency after the standing treatment. Exemplarily, the standing treatment temperature may be 25°C, 30°C, 35°C, 40°C, 45°C, 50°C, 55°C, 60°C, or 65°C, or may be within a range consisting of any two of the above values.

In some embodiments, further vacuum treatment may be performed after the standing treatment, and the next electrolyte injection operation may be performed after the vacuum treatment, which is more conducive to reducing the electrolyte injection resistance and improving the electrolyte injection efficiency. The internal air pressure of the initial battery after vacuum treatment may range from 100 Pa to 30000 Pa. Specifically, the electrolyte is provided to the initial battery according to electrolyte injection parameters, and standing treatment and vacuum treatment are sequentially performed between two adjacent electrolyte injection operations to obtain an electrolyte-injected battery.

As shown in FIG. 5, in some embodiments, before step S400, the method further includes step S500:
vacuum treatment is performed on the initial battery to enable the internal air pressure of the initial battery to meet a preset air pressure value.

Before electrolyte injection, the initial battery is vacuumized, so that there is a certain vacuum degree inside the initial battery, which is conducive to the electrolyte injection operation. Optionally, the preset air pressure value is an absolute pressure value, which may range from 100 Pa to 30000 Pa, for example, 100 Pa, 200 Pa, 300 Pa, 500 Pa, 600 Pa, 700 Pa, 800 Pa, 1000 Pa, 1200 Pa, 1300 Pa, 1500 Pa, 1800 Pa, 1900 Pa, 2000 Pa, 3000 Pa, 4000 Pa, 5000 Pa, 8000 Pa, 10000 Pa, 12000 Pa, 15000 Pa, 18000 Pa, 20000 Pa, 25000 Pa, or 30000 Pa, or may be within a range consisting of any two of the above values.

The above electrolyte injection method described in this embodiment of the present application can be used for preparing a battery cell.

In some embodiments, a method for preparing a battery cell includes:
an electrolyte-injected battery is prepared according to the electrolyte injection method provided in each of the above embodiments; and the electrolyte-injected battery is subjected to operation such as formation to prepare a battery cell.

The above electrolyte injection method described in this embodiment of the present application is applicable to an electrolyte injection system and a manufacturing system for battery cells.

FIG. 6 shows a schematic structural diagram of a manufacturing system 1 for battery cells in an embodiment of the present application.

As shown in FIG. 6, the manufacturing system 1 for battery cells is configured to manufacture battery cells. The manufacturing system 1 may include an electrolyte injection system 10, and the electrolyte injection system 10 is configured to inject electrolyte into a battery cell.

In some embodiments, the manufacturing system 1 may further include an electrode plate manufacturing device, and the electrode plate manufacturing device is configured to manufacture positive electrode plates, negative electrode plates, etc.

In some embodiments, the manufacturing system 1 may further include an electrode assembly manufacturing device, and the electrode assembly manufacturing device is configured to wind or stack a positive electrode plate, a spacer, and a negative electrode plate into an electrode assembly.

In some embodiments, the manufacturing system 1 may further include a case insertion device, and the case insertion device is configured to assemble the electrode assembly into the case.

In some embodiments, the manufacturing system 1 may further include a sealing device, and the sealing device is configured to seal the case.

In some embodiments, the manufacturing system 1 may further include a formation device, and the formation device is configured to perform formation operation on the battery cell to activate active materials in the electrode assembly.

Of course, the manufacturing system 1 may further include, in addition to the devices listed above, other devices that are well known in the art and are essential for manufacturing battery cells, which will not be described in detail here.

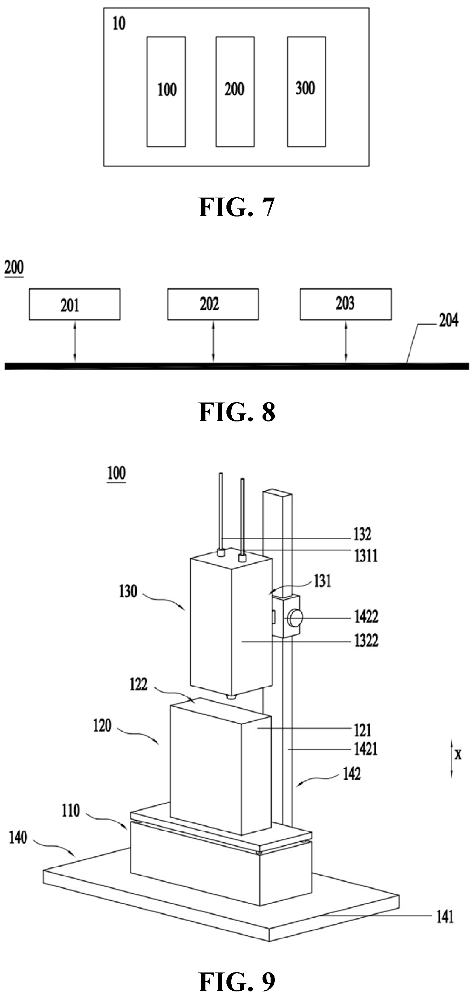

FIG. 7 shows a schematic structural diagram of an electrolyte injection system 10 in an embodiment of the present application.

As shown in FIG. 7, the electrolyte injection system 10 includes a detection apparatus 100, a control apparatus 200, and an electrolyte providing apparatus 300. The detection apparatus 100 is configured to detect the time and the weight of the battery sample corresponding to the time. The control apparatus 200 is configured to calculate electrolyte injection parameters according to the time detected by the detection apparatus 100 and the weight of the battery sample. The electrolyte providing apparatus 300 is configured to provide an electrolyte to the initial battery according to the electrolyte injection parameters.

The electrolyte providing apparatus 300 can be understood as an apparatus for injecting an electrolyte into a battery sample. Specifically, a device well known in the art can be used.

The control apparatus 200 calculates electrolyte injection parameters suitable for the initial battery through the data pre-detected by the detection apparatus 100, and injects electrolyte into the initial battery, thereby effectively improving the electrolyte injection efficiency.

FIG. 8 shows a schematic structural diagram of a control apparatus 200 in an embodiment of the present application.

As shown in FIG. 8, the control apparatus 200 may include a processor 201. The processor 201 may include a central processing unit (CPU), or an application specific integrated circuit (ASIC), or one or more integrated circuits that may be configured to implement this embodiment of the present application.

The control apparatus 200 may further include a memory 202 storing computer program instructions. The memory 202 may include a mass storage device 202 for data or instructions. As an example rather than a limitation, the memory 202 may include a hard disk drive (HDD), a floppy disk drive, a flash memory, an optical disc, a magneto-optical disc, a magnetic tape, a universal serial bus (USB) drive, or a combination of two or more thereof. The memory 202 may include a removable or non-removable (or fixed) medium, where appropriate. The memory 202 may be located inside or outside an integrated gateway disaster recovery device, where appropriate. In a specific embodiment, the memory 202 is a non-volatile solid-state memory.

In a specific embodiment, the memory 202 may include a read-only memory (ROM), a random-access memory (RAM), a disk storage medium device, an optical storage medium device, a flash memory device, or an electrical, optical, or another physical/tangible memory device 202. Therefore, usually, the memory 202 includes one or more tangible (non-transitory) computerreadable storage media (e.g., memory devices) encoded with software including computerexecutable instructions, and the software, when executed (e.g., by one or more processors 201), is operable to perform the operation described with reference to the method according to one aspect of the present application.

The processor 201 reads and executes the computer program instructions stored in the memory 202 to implement any one of the electrolyte injection methods in the above embodiments.

In an example, the control apparatus 200 may further include a communication interface 203 and a communication bus 204. As shown in FIG. 8, the processor 201, the memory 202, and the communication interface 203 are connected through the communication bus 204 and complete communication with each other.

The communication interface 203 is mainly configured to implement communication between the modules, apparatuses, units, and/or devices in the embodiments of the present application.

The communication bus 204 includes hardware, software, or both hardware and software, and couples the components of a picture processing device to each other. As an example rather than a limitation, the bus may include an accelerated graphics port (AGP) or other graphics buses, an enhanced industry standard architecture (EISA) bus, a front side bus (FSB), HyperTransport (HT) interconnection, an industry standard architecture (ISA) bus, infiniband interconnection, a low pin count (LPC) bus, a memory bus, a microchannel architecture (MCA) bus, a peripheral component interconnect (PCI) bus, a PCI-Express (PCI-X) bus, a serial advanced technology attachment (SATA) bus, a Video Electronics Standards Association local bus (VLB), or other appropriate buses, or a combination of two or more of the above. The communication bus 204 may include one or more buses, where appropriate. Although specific buses are described and illustrated in the embodiments of the present application, any suitable bus or interconnection is contemplated in the present application.

The electrolyte injection apparatus can perform the electrolyte injection method in the embodiment of the present application, thereby implementing the electrolyte injection method described with reference to the above embodiment.

In addition, with reference to the electrolyte injection method in the above embodiment, an embodiment of the present application may provide a computer storage medium to implement the electrolyte injection method. The computer storage medium stores computer program instructions, and the computer program instructions, when executed by a processor, implement any one of the electrolyte injection methods in the above embodiments.

In addition, an embodiment of the present application further provides a computer program product, including a computer program. When the computer program is executed by a processor, the steps and corresponding content in the above method embodiments can be implemented.

FIG. 9 shows a schematic structural diagram of a detection apparatus 100 in an embodiment of the present application.

As shown in FIG. 9, in some embodiments, the detection apparatus 100 includes an acquisition assembly 110, an accommodating assembly 120, and an electrolyte injection assembly 130. The acquisition assembly 110 is configured to obtain multiple times and the weight of a battery sample corresponding to each time. The accommodating assembly 120 is arranged on the acquisition assembly 110, the accommodating assembly 120 includes an accommodating cavity 121 with at least one opening 122, and the accommodating cavity 121 is configured to accommodate the battery sample. The electrolyte injection assembly 130 is arranged opposite to the opening 122, and the electrolyte injection assembly 130 is configured to be connected to or disconnected from the battery sample.

The detection apparatus 100 uses the battery sample as a test sample to detect relevant electrolyte injection parameters of the battery sample, transmits the detected relevant parameters to the control apparatus 200, and then designs more preferred electrolyte injection operation to inject electrolyte into the initial battery.

The acquisition assembly 110 may be configured to acquire the time and the weight of the battery sample. The acquisition assembly 110 may include devices such as an electronic scale, which may record the weight data of the battery sample changing over time in real time.

The accommodating assembly 120 is configured to accommodate the battery sample so as to support and fix the battery sample, thereby improving the accuracy of data acquired by the acquisition assembly 110. The accommodating assembly 120 may include an accommodating cavity 121 with at least one opening 122. The battery sample is located in the accommodating cavity 121. The opening 122 is arranged opposite to the electrolyte injection assembly 130, so that the electrolyte injection assembly 130 may perform electrolyte injection operation on the battery sample. The number of the opening 122 may be one, two, etc., and optionally may be one. The accommodating assembly 120 may be designed according to the case structure of the battery sample. For example, if the case of the battery sample is a cylindrical case, the accommodating cavity 121 of the accommodating assembly 120 may be set as a cylinder. For another example, if the case of the battery sample is a square case, the accommodating cavity 121 of the accommodating assembly 120 may be set as a rectangular parallelepiped. Exemplarily, the accommodating cavity 121 may be formed by enclosing a plurality of connecting elements. In some embodiments, the gap between the accommodating cavity 121 and the battery cell may range from 0 to 1 mm, so as to constrain the battery cell, thereby reducing the risk of volume expansion of the battery cell.

The electrolyte injection assembly 130 is arranged opposite to the opening 122, and is configured to communicate with the inside of the battery sample to provide an electrolyte into the battery sample and detect the relevant electrolyte injection parameters of the battery sample. After the electrolyte injection is completed, the electrolyte injection assembly 130 can be disconnected from the battery sample. In some embodiments, the electrolyte injection assembly 130 includes an electrolyte injection member 131 and an air pressure pipeline 132. The electrolyte injection member 131 includes an electrolyte injection pipeline 1311 and an electrolyte injection portion 1322 communicating with the electrolyte injection pipeline 1311. The electrolyte injection pipeline 1311 is configured to communicate with an external electrolyte. The electrolyte injection portion 1322 is configured to be connected to or disconnected from the battery sample. The air pressure pipeline 132 is arranged at the electrolyte injection portion 1322, the air pressure pipeline 132 is configured to communicate with an external air path, and the air pressure pipeline 132 is configured to be connected to or disconnected from the battery sample through the electrolyte injection portion 1322. Before the electrolyte injection of the battery sample, the air pressure pipeline 132 can be connected to the inside of the battery sample to extract the gas inside the battery sample so that the inside of the battery sample has a certain vacuum degree, which is conducive to the subsequent electrolyte injection operation. After the gas extraction is completed, the air pressure pipeline 132 is disconnected from the battery sample. The electrolyte injection pipeline 1311 of the electrolyte injection member 131 can be connected to the external electrolyte, so that the external electrolyte is stored in the electrolyte injection portion 1322. When the electrolyte injection of the battery sample is required, the electrolyte injection portion 1322 is connected to the inside of the battery sample to inject electrolyte into the battery sample. After the electrolyte injection is completed, the electrolyte injection portion 1322 and the battery sample are disconnected. Optionally, the electrolyte injection portion 1322 may include an electrolyte injection cup and an electrolyte injection nozzle connected to the electrolyte injection cup, the electrolyte injection cup is configured to store an electrolyte, and the electrolyte injection nozzle is configured to be connected to or disconnected from the battery sample. The electrolyte injection cup may be configured to communicate with an electrolyte pipeline, and may communicate with the air pressure pipeline 132.

Therefore, the detection apparatus 100 in the embodiment of the present application can accurately obtain relevant electrolyte injection parameters of the battery sample, thereby improving the accuracy of electrolyte injection curve construction.

As shown in FIG. 9, in some embodiments, the detection apparatus 100 in this embodiment of the present application may further include a bracket assembly 140, and the bracket assembly 140 may cooperate with the electrolyte injection assembly 130 to adjust the distance between the electrolyte injection assembly 130 and the battery cell, so as to facilitate electrolyte injection and vacuum operation. Specifically, the bracket assembly 140 includes a base 141 and a guide member 142. The base 141 is provided with an acquisition assembly 110. The guide member 142 includes a supporting portion 1421 and a sliding portion 1422. The supporting portion 1421 is connected to the base 141. The sliding portion 1422 is fixedly connected to the electrolyte injection assembly 130. The sliding portion 1422 is connected to the supporting portion 1421. The sliding portion 1422 includes a first state and a second state. In the first state, the sliding portion 1422 is movably connected to the supporting portion 1421 to drive the electrolyte injection assembly 130 to move towards or away from the accommodating assembly 120; and in the second state, the sliding portion 1422 is locked with the supporting portion 1421.

The base 141 plays a supporting role, and is configured to support the acquisition assembly 110 and further support the accommodating assembly 120 arranged on the acquisition assembly 110.

The supporting portion 1421 of the guide member 142 and the base 141 may be fixedly connected to play a further supporting and guiding role. The sliding portion 1422 is connected to the supporting portion 1421. When electrolyte injection or vacuumizing is required, the sliding portion 1422 drives the electrolyte injection assembly 130 to move towards the opening 122 of the accommodating assembly 120 to approach the opening 122 of the accommodating assembly 120. In this case, the sliding portion 1422 is movably connected to the supporting portion 1421, and the sliding portion 1422 is in the first state. After the electrolyte injection assembly 130 moves in place, the sliding portion 1422 is locked with the supporting portion 1421, the sliding portion 1422 is in the second state, and the electrolyte injection assembly 130 begins to perform the electrolyte injection or vacuumizing operation. After the electrolyte injection assembly 130 performs the electrolyte injection or vacuumizing operation, the sliding portion 1422 drives the electrolyte injection assembly 130 to move in a direction away from the accommodating assembly 120, so as to be away from the opening 122 of the accommodating assembly 120.

Optionally, the sliding portion 1422 and the supporting portion 1421 may move along an extension direction of the supporting portion 1421, and the extension direction of the supporting portion 1421 is parallel to a first direction X. For example, the accommodating assembly 120 and the electrolyte injection assembly 130 are arranged oppositely along the first direction X. In the first state of the sliding portion 1422, the sliding portion 1422 and the supporting portion 1421 are movably connected along the first direction X to drive the electrolyte injection assembly 130 to move along the first direction X towards or away from the accommodating assembly 120. In this case, the supporting portion 1421 may play a guiding role to improve the movement accuracy of the electrolyte injection assembly 130.

Further optionally, the acquisition assembly 110, the accommodating assembly 120, and the electrolyte injection assembly 130 may be arranged in sequence along the first direction X. This arrangement manner is conducive to acquiring parameters of the battery sample and is beneficial for the accurate movement of the electrolyte injection assembly 130.

Further optionally, the base 141, the acquisition assembly 110, the accommodating assembly 120, and the electrolyte injection assembly 130 may be arranged in sequence along the first direction X. This arrangement manner is conducive to acquiring parameters of the battery sample and is beneficial for the accurate movement of the electrolyte injection assembly 130.

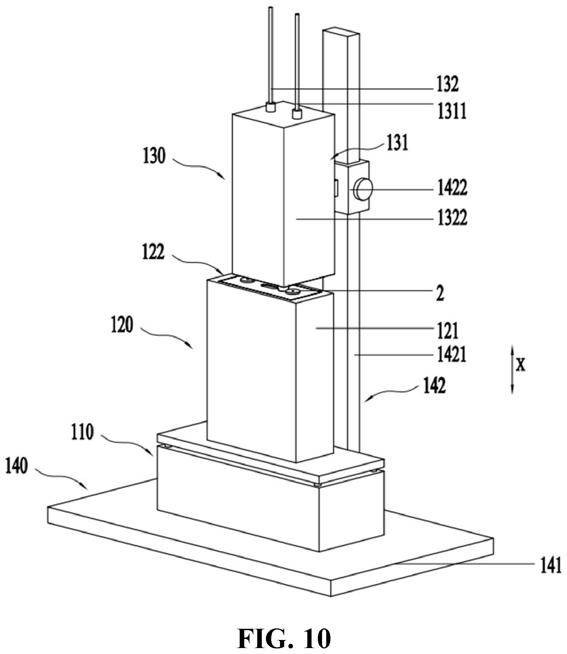

As shown in FIG. 10, as a specific embodiment for testing relevant electrolyte injection parameters of a battery sample 2 in the present application, the detection apparatus 100 includes an acquisition assembly 110, an accommodating assembly 120, an electrolyte injection assembly 130, and a bracket assembly 140. The acquisition assembly 110 is configured to obtain multiple times and the weight of the battery sample 2 corresponding to each time. The accommodating assembly 120 is arranged on the acquisition assembly 110, the accommodating assembly 120 includes an accommodating cavity 121 with at least one opening 122, and the accommodating cavity 121 is configured to accommodate the battery sample 2. The electrolyte injection assembly 130 is arranged opposite to the opening 122, and the electrolyte injection assembly 130 is configured to be connected to or disconnected from the battery sample 2. The bracket assembly 140 includes a base 141 and a guide member 142. The base 141 is provided with an acquisition assembly 110. The guide member 142 includes a supporting portion 1421 and a sliding portion 1422. The supporting portion 1421 is connected to the base 141. The sliding portion 1422 is fixedly connected to the electrolyte injection assembly 130. The sliding portion 1422 is connected to the supporting portion 1421. The sliding portion 1422 includes a first state and a second state. In the first state, the sliding portion 1422 is movably connected to the supporting portion 1421 to drive the electrolyte injection assembly 130 to move towards or away from the accommodating assembly 120; and in the second state, the sliding portion 1422 is locked with the supporting portion 1421. The accommodating assembly 120 and the electrolyte injection assembly 130 are arranged oppositely along the extension direction of the supporting portion 1421, that is, the first direction X. In the first state of the sliding portion 1422, the sliding portion 1422 and the supporting portion 1421 are movably connected along the first direction X to drive the electrolyte injection assembly 130 to move along the first direction X towards or away from the accommodating assembly 120.

Although illustrative embodiments have been shown and described, it should be understood by those skilled in the art that the aforementioned embodiments should not be construed as limitations on the present application, and that changes, replacements and modifications may be made to the embodiments without departing from the spirit, principles and scope of the present application.

## Claims

1. An electrolyte injection method, comprising:
constructing an electrolyte injection curve based on the obtained electrolyte injection time and electrolyte injection volume of a battery sample;
dividing the electrolyte injection curve into at least two segments so that the average slopes of two adjacent segments of electrolyte injection curves are different, and taking a connection point between the two adjacent segments of electrolyte injection curves as a target time inflection point;
calculating electrolyte injection parameters according to the target time inflection point, the electrolyte injection parameters comprising the number of electrolyte injection operations and the electrolyte injection volume corresponding to each electrolyte injection operation; and
providing an electrolyte to an initial battery according to the electrolyte injection parameters, and performing standing treatment between two adjacent electrolyte injection operations to obtain an electrolyte-injected battery.

2. The electrolyte injection method according to claim 1, wherein the step of providing an electrolyte to an initial battery according to the electrolyte injection parameters, and performing standing treatment between two adjacent electrolyte injection operations to obtain an electrolyte-injected battery comprises:
providing a first injection volume of electrolyte to an initial battery to obtain an electrolyte-pre-injected battery, wherein the number of electrolyte injection operations in the electrolyte injection parameters is two, and the electrolyte injection volumes corresponding to the two electrolyte injection operations are respectively the first electrolyte injection volume and a second electrolyte injection volume;
performing standing treatment on the electrolyte-pre-injected battery to obtain a standing battery; and
providing the second injection volume of electrolyte to the standing battery to obtain an electrolyte-injected battery.

3. The electrolyte injection method according to claim 1, wherein the step of providing an electrolyte to an initial battery according to the electrolyte injection parameters, and performing standing treatment between two adjacent electrolyte injection operations to obtain an electrolyte-injected battery comprises:
providing a first injection volume of electrolyte to an initial battery to obtain an electrolyte-pre-injected battery, wherein the number of electrolyte injection operations in the electrolyte injection parameters is three, and the electrolyte injection volumes corresponding to the three electrolyte injection operations are respectively the first electrolyte injection volume, a second electrolyte injection volume, and a third electrolyte injection volume;
performing standing treatment on the electrolyte-pre-injected battery to obtain a pre-standing battery;
providing the second injection volume of electrolyte to the pre-standing battery to obtain an electrolyte-re-injected battery;
performing standing treatment on the electrolyte-re-injected battery to obtain a re-standing battery; and
providing the third injection volume of electrolyte to the re-standing battery to obtain an electrolyte-injected battery.

4. The electrolyte injection method according to any one of claims 1 to 3, wherein
the standing treatment time ranges from 0.1 h to 10 h; and/or the standing treatment temperature ranges from 20°C to 65°C.

5. The electrolyte injection method according to any one of claims 1 to 4, wherein before the step of providing an electrolyte to an initial battery according to the electrolyte injection parameters, and performing standing treatment between two adjacent electrolyte injection operations to obtain an electrolyte-injected battery, the method further comprises:
performing vacuum treatment on the initial battery to enable the internal air pressure of the initial battery to meet a preset air pressure value.

6. The electrolyte injection method according to any one of claims 1 to 5, wherein the preset air pressure value ranges from 100 Pa to 30000 Pa.

7. The electrolyte injection method according to any one of claims 1 to 6, wherein the step of constructing an electrolyte injection curve based on the electrolyte injection time and electrolyte injection volume of a battery sample comprises:
providing the electrolyte to the battery sample;
obtaining the initial time of providing the electrolyte and the weight of the battery sample corresponding to the initial time, and obtaining the weights of the battery sample corresponding to multiple times respectively, wherein the multiple times occur after the initial time;
calculating the difference between each time and the initial time as an electrolyte injection time, and calculating the difference between the weight corresponding to each time and the weight corresponding to the initial time as an electrolyte injection volume; and
constructing an electrolyte injection curve based on the electrolyte injection time and the electrolyte injection volume.

8. The electrolyte injection method according to any one of claims 1 to 7, wherein the average slope of one of the two adjacent segments of electrolyte injection curves is A, and the average slope of the other segment of electrolyte injection curve is B, wherein 1×10⁻⁶≤A/B<1, and optionally, 1×10⁻⁶≤A/B≤1×10⁻¹.

9. A detection apparatus, comprising:
an acquisition assembly, configured to obtain multiple times and the weight of a battery sample corresponding to each time;
an accommodating assembly, arranged on the acquisition assembly, the accommodating assembly comprising an accommodating cavity with at least one opening, and the accommodating cavity being configured to accommodate the battery sample; and
an electrolyte injection assembly, arranged opposite to the opening, the electrolyte injection assembly being configured to be connected to or disconnected from the battery sample.

10. The detection apparatus according to claim 9, wherein the detection apparatus further comprises a bracket assembly, and the bracket assembly comprises:
a base, the base being provided with the acquisition assembly; and
a guide member, comprising a supporting portion and a sliding portion, the supporting portion being connected to the base, the sliding portion being fixedly connected to the electrolyte injection assembly, the sliding portion being connected to the supporting portion, and the sliding portion comprising a first state and a second state, wherein in the first state, the sliding portion is movably connected to the supporting portion to drive the electrolyte injection assembly to move towards or away from the accommodating assembly; and in the second state, the sliding portion is locked with the supporting portion.

11. The detection apparatus according to claim 10, wherein the supporting portion extends along a first direction; and
the accommodating assembly and the electrolyte injection assembly are arranged oppositely along the first direction, and in the first state, the sliding portion is movably connected to the supporting portion to drive the electrolyte injection assembly to move towards or away from the accommodating assembly along the first direction.

12. The detection apparatus according to any one of claims 9 to 11, wherein the electrolyte injection assembly comprises:
an electrolyte injection member, comprising an electrolyte injection pipeline and an electrolyte injection portion communicating with the electrolyte injection pipeline, the electrolyte injection pipeline being configured to communicate with an external electrolyte, and the electrolyte injection portion being configured to be connected to or disconnected from the battery sample; and
an air pressure pipeline, arranged at the electrolyte injection portion, the air pressure pipeline being configured to communicate with an external air path, and the air pressure pipeline being configured to be connected to or disconnected from the battery sample through the electrolyte injection portion.

13. An electrolyte injection system, comprising:
the detection apparatus according to any one of claims 9 to 12;
a control apparatus, configured to calculate electrolyte injection parameters according to the time detected by the detection apparatus and the weight of a battery sample; and
an electrolyte providing apparatus, configured to provide an electrolyte to an initial battery according to the electrolyte injection parameters.

14. A manufacturing system for battery cells, comprising the electrolyte injection system according to claim 13.
